# EUROPÄISCHE PATENTSCHRIFT

(11) **EP 3 133 448 B1**
(45) Veröffentlichungstag und Bekanntmachung des Hinweises auf die Patenterteilung: **20.05.2020**
(21) Anmeldenummer: 15180216.2
(22) Anmeldetag: 07.08.2015
(51) Int. Cl.: G05B 19/00

(54) **VERFAHREN UND VORRICHTUNG ZUM PROGRAMMIEREN UND STEUERN VON HYDRAULIKGERÄTEN**
METHOD AND DEVICE FOR PROGRAMMING AND CONTROLLING HYDRAULIC DEVICES
PROCEDE ET DISPOSITIF DE PROGRAMMATION ET DE COMMANDE POUR DISPOSITIFS HYDRAULIQUES

(43) Veröffentlichungstag der Anmeldung: 22.02.2017
(73) Patentinhaber: HAWE Hydraulik SE, 85609 Aschheim (DE)
(72) Erfinder: Wieringa, Timotheus, 80797 München (DE); Scheubert, Peter, 83714 Miesbach (DE)
(74) Vertreter: Grosse Schumacher Knauer von Hirschhausen

(56) Entgegenhaltungen:
- US-A1- 2013 211 547
- US-B1- 7 035 898

## Beschreibung

Die vorliegende Erfindung betrifft allgemein Hydraulikgeräte und insbesondere die Steuerung derselben.

Hydraulikgeräte wie Pumpen, Ventile und andere in Hydrauliksystemen verwendete Komponenten werden in zahlreichen Branchen für Steuerungsaufgaben eingesetzt, in denen Flüssigkeiten zur Kraft-, Energie- oder Signalübertragung verwendet werden. Dabei kommen oft mehrere, mitunter auch sehr viele Hydraulikgeräte gleichzeitig zum Einsatz, die in dem Fluidleitungssystem der entsprechenden Maschine oder Anlage aufeinander abgestimmt betrieben werden. Hierzu sind moderne Hydraulikgeräte durch Computerprogramme steuerbar (beispielsweise mittels speicherprogrammierbarer Steuerung, SPS) und oftmals auch durch ein Bussystem wie etwa dem CAN-Bus miteinander vernetzt.

Beispielsweise gibt es Hydraulikgeräte, die trotz ihrer kompakten und funktionalen Bauform imstande sind, ein Computerprogramm auszuführen, das die Funktionsweise des Hydraulikgerätes steuert. Hierzu kann der das Hydraulikgerät einsetzende Techniker oder Ingenieur das Computerprogramm speziell für das jeweilige Hydraulikgerät und die spezielle Aufgabe erstellen, beispielsweise durch Compilierung eines C-Programms, und über die Bus-Verbindung auf das Hydraulikgerät laden.

Andere Hydraulikgeräte sind im Stand der Technik bekannt, die nicht über eine eigenständige Möglichkeit verfügen, Programme selbst auszuführen, sondern die stattdessen in einem Slave-Betrieb arbeiten. Solche Geräte empfangen Steuerungsbefehle über die Bus-Schnittstelle und führen das durch diese Steuerungsbefehle definierte Verhalten entsprechend aus. Solche Hydraulikgeräte werden von Hydrauliksteuerungen gesteuert, die entweder eigenständige Gerätekomponenten im vernetzten Bus-System oder separate, mit dem Bus-System über Adapter verbundene Computer sind. Steuerungsabläufe für solche Hydraulikgeräte werden erstellt, indem das Steuerungsprogramm, beispielsweise wieder durch Compilierung eines C-Programms, erstellt und auf die Hydrauliksteuerung oder den separaten Computer geladen und dort ausgeführt wird.

Die vorgenannten Hydraulikgeräte und ihre Steuerungen stellen somit für den die Geräte einsetzenden Techniker oder Ingenieur eine äußerst flexible Lösung im jeweiligen Hydrauliksystem dar, da der Steuerungsablauf jederzeit mit nahezu beliebigen Freiheitsgraden durch Änderung des zugrundeliegenden Steuerungsprogramms und Laden desselben auf das Gerät, die Steuerung oder den separaten Computer an neue Bedingungen angepasst werden kann. Allerdings ist es hierzu beispielsweise erforderlich, den zugrundeliegenden Programmcode zu ändern, neu zu compilieren, den Objektcode gegebenenfalls zu linken und das Ergebnis zu installieren. Der die Hydraulikgeräte einsetzende Techniker oder Ingenieur muss daher über die entsprechenden Programmierwerkzeuge (beispielsweise einen Compiler) verfügen und diese Programmierwerkzeuge durch Updates aktuell halten und durch Backups und redundante Systeme sichern. Wird das für die Programmierwerkzeuge verwendete Betriebssystem durch Aktualisierungen oder aus anderen Gründen geändert oder muss es durch ein neueres oder anderes Betriebssystem ersetzt werden, so muss die Programmierumgebung des die Hydraulikgeräte einsetzenden Technikers oder Ingenieurs gegebenenfalls ebenso ersetzt oder neu installiert werden. Dies kann zu einem erheblichen Pflegeaufwand führen, um sicherzustellen, dass der Betrieb der Hydraulikgeräte auch weiterhin gewährleistet ist und an neue Gegebenheiten angepasst werden kann.

Das Dokument US 7 035 898 B1 offenbart ein Steuerungssystem zum Programmieren eines Anwendungsprogramms, das ein Fabrikautomatisierungsgerät in einem Kommunikationsnetzwerk steuert, in dem ein Programmiergerät funktionsfähig mit dem Kommunikationsnetzwerk verbunden ist. Ein Programmpaket ist in das Programmiergerät eingebettet und dient zur Erstellung und Bearbeitung des Anwendungsprogramms. Mindestens eine Webseite ist auf dem Programmiergerät vorhanden und funktionsfähig mit dem Programmpaket verbunden. Die Webseite ist für einen Benutzer über einen Webbrowser zugänglich, um das Anwendungsprogramm zu bearbeiten, das das Automatisierungsgerät steuert.

Der Erfindung liegt daher die Aufgabe zugrunde, eine Vorrichtung und ein Verfahren für die Steuerung von Hydraulikgeräten bereitzustellen, die den Pflegeaufwand seitens des die jeweiligen Hydraulikgeräte einsetzenden Nutzers verringern, ohne die Flexibilität bei der Erstellung von Steuerungsabläufen für diese Hydraulikgeräte zu vermindern.

Diese Aufgabe wird durch die in den unabhängigen Patentansprüchen angegebene Erfindung gelöst. Bevorzugte Ausgestaltungen sind in den Unteransprüchen angegeben.

Insbesondere wird ein Verfahren zum Steuern eines oder mehrerer Hydraulikgeräte bereitgestellt, in dem zunächst ein Steuerungsablauf für das eine oder die mehreren Hydraulikgeräte in einer von einem Server bereitgestellten browserbasierten Anwendung erstellt wird. Anschließend wird die serverseitige Erzeugung eines den erstellten Steuerungsablauf realisierenden Programms veranlasst. Schließlich wird das erzeugte Programm zur Durchführung des Steuerungsablaufs für das eine oder die mehreren Hydraulikgeräte ausgeführt.

Da der Steuerungsablauf somit in einer von einem Server bereitgestellten browserbasierten Anwendung erstellt und daraus noch auf dem Server ein entsprechendes Programm erzeugt wird, findet die Programmerzeugung serverseitig statt, ohne dass der die Hydraulikgeräte einsetzende Techniker oder Ingenieur eine eigenständige Programmierumgebung besitzen muss. Der Nutzer des entsprechenden Hydraulikgerätes muss lediglich über einen Browser verfügen, braucht darüber hinaus jedoch keine speziellen Programmierwerkzeuge. Dies reduziert in vorteilhafter Weise den Pflegeaufwand auf Seiten des Gerätenutzers. Der Nutzer bleibt aber hinsichtlich der Möglichkeiten, wie die entsprechenden Geräte zu steuern sind, unverändert flexibel.

Verfügen das eine oder die mehreren Hydraulikgeräte über einen Prozessor zur Ausführung des heruntergeladenen Programms, so kann das serverseitig erzeugte, den erstellten Steuerungsablauf realisierende Programm einen Programmcode enthalten, der durch den Prozessor ausführbar ist. Das erzeugte Programm kann dann vor dessen Ausführung heruntergeladen und auf dem einen oder den mehreren Hydraulikgeräten gespeichert werden. Dies bringt für den das Hydraulikgerät einsetzenden Techniker oder Ingenieur den Vorteil mit sich, dass selbst für den konkret in einem Gerät eingesetzten Prozessor keine speziell angepasste Programmierumgebung erforderlich ist, sondern auch für diese spezielle Anwendung eine serverseitige Lösung angeboten wird, die den Gerätenutzer in keiner Weise belastet.

Ähnliche Vorteile werden erzielt, wenn das eine oder die mehreren Hydraulikgeräte zur Durchführung des Steuerungsablaufs mit einem Computer verbunden werden und das den erstellten Steuerungsablauf realisierende Programm einen Programmcode enthält, der auf dem Computer ausführbar ist. In diesem Fall kann das erzeugte Programm heruntergeladen und auf dem Computer gespeichert und eine Datenverbindung von dem Computer zu dem einen oder den mehreren Hydraulikgeräten aufgebaut werden. Wird das Programm dann auf dem Computer ausgeführt, sendet der Computer Steuerbefehle über die Datenverbindung an das eine oder die mehreren Hydraulikgeräte zur Durchführung des Steuerungsablaufs. Der die Hydraulikgeräte einsetzende Nutzer wird auch hierbei nicht mit Installation und Pflege entsprechender Programmierwerkzeuge belastet.

Enthalten das eine oder die mehreren Hydraulikgeräte den Server, so kann die Programmerstellung und Programmausführung tatsächlich auf demselben Gerät stattfinden. Der das Hydraulikgerät einsetzende Techniker oder Ingenieur kann somit das eine oder die mehreren Hydraulikgeräte unabhängig von einer Netzwerkverbindung zu einem entfernten Server fertig programmieren.

Wird das den erstellten Steuerungsablauf realisierende Programm durch Compilierung auf dem Server erzeugt und in compilierter Form heruntergeladen, so genügt eine einzige serverseitige Compilerinstallation, um nahezu beliebige Hydraulikgeräte in nahezu beliebigen Systemumgebungen zu steuern. Das dem serverseitigen Compiler zugrundeliegende Betriebssystem und die serverseitige Computerplattform müssen keineswegs denen entsprechen, die beim Betrieb des Hydrauliksystems eingesetzt werden.

Besonders vorteilhaft fällt die von dem Server bereitgestellte browserbasierte Anwendung aus, wenn sie eine grafische Programmierung des Steuerungsablaufs gestattet. Hierbei sind verschiedene Funktionselemente auswählbar und miteinander verbindbar. Der ein Hydraulikgerät einsetzende Techniker oder Ingenieur, der mittels seines Browsers eine solche grafik-basierte Programmieranwendung einsetzt, braucht daher keine der eigentlichen Programmerzeugung (beispielsweise Compilierung) zugrundeliegende Programmiersprache oder -sprachversion zu kennen oder zu berücksichtigen. Er kann vielmehr unabhängig von der serverseitig im Hintergrund eingesetzten Programmiersprache grafisch programmieren, ohne dass spezielle Programmierkenntnisse oder nennenswerte Programmiererfahrungen erforderlich wären. Da eine grafische Programmierung des Steuerungsablaufs von der serverseitig tatsächlich verwendeten Programmiersprache entkoppelt ist, kann der die Hydraulikgeräte einsetzende Techniker oder Ingenieur einen auch komplizierten Steuerungsablauf selbst dann einfach und in einheitlicher Weise erstellen, wenn mehrere Hydraulikgeräte eingesetzt werden, deren Programmerstellung verschiedene Programmiersprachen und/oder Compiler erfordert.

Werden in der eine grafische Programmierung gestattenden browserbasierten Anwendung Verbindungen von Funktionselementen automatisch unterbunden, die die Erzeugung oder Ausführung des Programms verhindern oder dabei zu Fehlern führen würden, so wird die Programmerstellung in vorteilhafter Weise weiter vereinfacht, da eventuelle Fehlfunktionen bereits im Vorfeld vermieden werden.

Werden darüber hinaus verschiedene Signaltypen oder Funktionselemente farblich unterschiedlich grafisch dargestellt, so erhält der die grafische Programmierung durchführende Techniker oder Ingenieur bereits eine visuelle Hilfestellung, die eine noch effizientere Erstellung des Steuerungsablaufs ermöglicht.

Eine weitere vorteilhafte Hilfestellung für den den Steuerungsablauf erstellenden Nutzer wird dadurch erzielt, dass in der grafischen browserbasierten Anwendung ausgewählte Funktionselemente an einem Raster ausgerichtet dargestellt werden. Die hierdurch erzielte verstärkte Übersichtlichkeit ermöglicht eine schnellere und im Ergebnis auch fehlerfreiere Programmierung.

Stellt die von dem Server bereitgestellte browserbasierte Anwendung nur solche Funktionselemente zur Auswahl, die in den Steuerungsabläufen für das eine oder die mehreren Hydraulikgeräte verwendbar sind, so werden Fehlprogrammierungen in vorteilhafter Weise weiter reduziert. Selbiges gilt für solche browserbasierten Anwendungen, die Funktionselemente zur Auswahl stellen, die im Hinblick auf das eine oder die mehreren Hydraulikgeräte vorkonfiguriert sind.

Ist die von dem Server bereitgestellte browserbasierte Anwendung mehrbenutzerfähig und umfasst sie eine benutzerspezifische Projektverwaltung, so können eine Vielzahl von Gerätesteuerungen von mehreren Personen erstellt werden.

Im Zusammenhang mit einzelnen oder allen der vorgenannten Erfindungsmerkmalen wird daher ferner eine Vorrichtung zum Erzeugen eines Programms zur Durchführung eines Steuerungsablaufs für ein oder mehrere Hydraulikgeräte bereitgestellt, die einen Anwendungsserver und eine Programmerzeugungseinrichtung umfasst. Der Anwendungsserver stellt eine Anwendung für einen mit der Vorrichtung verbundenen Client-Computer zum Erstellen des Steuerungsablaufs für das eine oder die mehreren Hydraulikgeräte durch Bedienung der Anwendung mittels eines Browers des Client-Computers bereit. Die Programmerzeugungseinrichtung erzeugt ein den erstellten Steuerungsablauf realisierendes Programm.

Ausführungsbeispiele der Erfindung werden im Folgenden unter Bezugnahme auf die beigefügten Zeichnungen näher erläutert, in denen:
- Fig. 1: die gesamte Systemanordnung gemäß einer Ausgestaltung der Erfindung veranschaulicht,
- Fig. 2: ein Flußdiagramm des erfindungsgemäßen Verfahrens zur Steuerung von Hydraulikgeräten gemäß einer Ausgestaltung ist, und
- Fig. 3: eine Bildschirmdarstellung zur grafischen Programmierung in einer browserbasierten Anwendung gemäß einer Ausgestaltung der Erfindung ist.

In den Ausgestaltungen der Erfindung können Steuerungen für Hydraulikgeräte (beispielsweise Typ EV2S-CAN oder CAN-lO14 der HAWE Hydraulik SE sowie beliebige weitere Steuerungen) beziehungsweise eigenständige PC-Anwendungen mittels eines Browers (zum Beispiel Chrome, Firefox oder Internet Explorer) online erstellt werden. Dabei gestatten die Ausgestaltungen der Erfindung eine browserbasierte Programmierung mittels einer Oberfläche, die es ermöglicht, verschiedene Funktionsblöcke (zum Beispiel Eingänge, Ausgänge, Logikblöcke und vordefinierte Funktionen) beispielsweise aus einer vorhandenen Liste auszuwählen und über Verbindungen logisch miteinander zu verknüpfen. Per Knopfdruck wird dann auf dem Server das Programm für das Zielsystem erstellt und dem Benutzer zum Download angeboten. Anschließend kann dieser das heruntergeladene Programm auf die Steuerung oder das Gerät laden bzw. auf einem separaten PC ausführen.

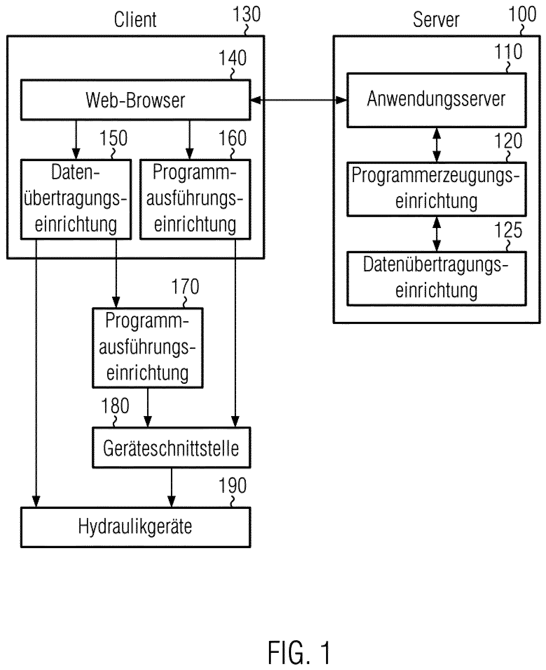

Fig. 1 zeigt eine Systemanordnung gemäß einer Ausgestaltung der Erfindung. Ein Server 100 ist vorzugsweise ein über das Internet ansprechbarer Web-Server, kann in einer anderen Ausgestaltung aber auch ein in einem größeren lokalen Netzwerk integrierter Web-Server sein. In einer weiteren Ausgestaltung ist der Server 100 Bestandteil des Hydraulikgeräts oder seiner Steuerung.

Auf den Server 100 greift in der Ausgestaltung von Fig. 1 ein Client-Computer 130 zu. Ist der Server 100 ein entfernter Server, so kann der Zugriff des Client-Computers 130 auf den Server 100 vorzugsweise über das Internet erfolgen. Ist der Server 100 ein in einem größeren lokalen Netzwerk integrierter Web-Server, so kann der Zugriff vorzugsweise über eine lokale, kabelgebundene oder kabellose (z.B. WLAN-) Verbindung erfolgen. Ist der Server 100 Bestandteil des Hydraulikgeräts oder seiner Steuerung, so kann vorzugsweise ein Netzwerkkabel oder eine Drahtlosverbindung (z.B. WLAN) zum Einsatz kommen, um den Client-Computer 130 mit dem Server 100 (d.h. dem Hydraulikgerät bzw. der Steuerung) zu verbinden. Jede andere Art der Datenverbindung zwischen Client und Server ist aber auch möglich. Der Client-Computer ist bezüglich seines Betriebssystems und seiner sonstigen Software-Ausstattung weitgehend unbeschränkt und kann insbesondere von dem auf dem Server 100 laufenden Betriebssystem unabhängig sein.

Der Client-Computer 130 verfügt über einen Web-Browser 140, über den der Benutzer, also in der Regel ein Hydraulikgeräte betreibender Techniker oder Ingenieur, eine Verbindung zum Server 100 aufbaut. Über den Web-Browser 140 wird serverseitig eine Anwendung gestartet, die dort auf einem Anwendungsserver 110 läuft und Bildschirmausgaben in der Darstellungsfläche des Web-Browsers 140 zur Anzeige bringt.

Mittels der so vom Anwendungsserver 110 bereitgestellten und durch den Benutzer des Web-Browsers 140 bedienbaren Anwendung kann der Client-Benutzer ein Steuerungsprogramm für seine lokal betriebenen Hydraulikgeräte erzeugen, ohne selbst entsprechende Programmierwerkzeuge zu besitzen. Der Benutzer definiert lediglich mittels des Web-Browsers 140 die von den Hydraulikgeräten durchzuführenden Steuerungsabläufe. Diese Ablaufsdefinitionen werden an den Anwendungsserver 110 übertragen. Gibt der Benutzer wiederum über den Web-Browser 140 den Befehl zur Programmerzeugung ein, so veranlasst der Anwendungsserver 110 die ebenfalls auf dem Server 100 vorhandene Programmerzeugungseinrichtung 120, das entsprechende Steuerungsprogramm zu erzeugen. Dieses Programm kann anschließend über eine Datenübertragungseinrichtung des Servers 100 auf den Web-Browser 140 heruntergeladen werden. In einer Ausgestaltung, in der der Server 100, und somit auch die Programmerzeugungseinrichtung 120, in dem Hydraulikgerät oder einer Steuerung integriert ist, kann das Programm direkt auf das Gerät geladen werden. Die Datenübertragungseinrichtung kann als separate Einheit 125 des Servers 100 vorgesehen sein, seine Funktionalität kann aber auch in dem Anwendungsserver 110 integriert sein, der dann zusätzlich die Rolle der Datenübertragungseinrichtung übernimmt.

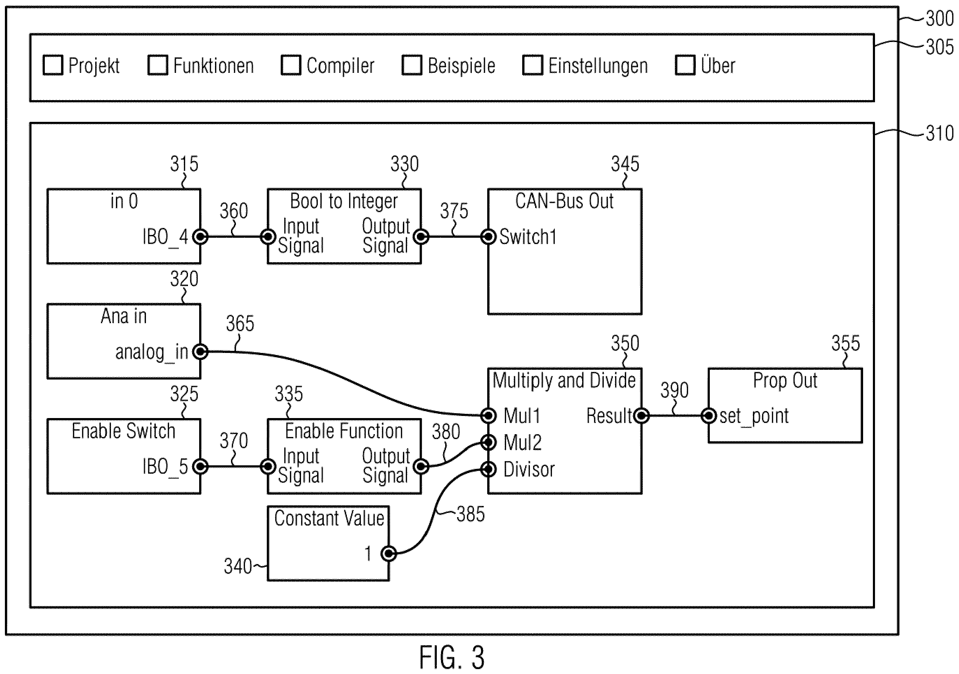

In einer bevorzugten Ausgestaltung der Erfindung wird für die Erstellung der Ablaufsdefinitionen im Web-Browser 140 eine grafische Darstellung verwendet, die im Zusammenhang mit Fig. 3 näher erläutert wird. In anderen Ausgestaltungen definiert der Benutzer die Steuerungsabläufe durch Texteingabe, wobei die Texteingabe auch Quellcode einer höheren Programmiersprache wie etwa C, sein kann.

Empfängt der Anwendungsserver 110 vom Client 130 den Befehl zur Programmerzeugung, so erzeugt der Anwendungsserver 110 gegebenenfalls Programmcode in einer höheren Programmiersprache und übergibt diesen an die Programmiererzeugungseinrichtung 120. In einer Ausgestaltung kann dies wiederum C-Code sein, die Erfindung ist aber nicht auf diese spezifische Programmiersprache eingeschränkt. Die Programmiererzeugungseinrichtung 120 enthält in dieser Ausgestaltung einen Compiler, der aus dem Quellcode Objektcode erzeugt und diesen an die Datenübertragungseinrichtung 110, 125 zum Download an den Web-Browser 140 bereitstellen kann. In einer alternativen Ausgestaltung umfasst die Programmerzeugungseinrichtung 120 ferner einen Linker zur Erzeugung eines direkt ausführbaren Programmcodes mittels des compilierten Objektcodes, zur Bereitstellung des Programmcodes an den Anwendungsserver 110 und zum optionalen Download an den Web-Browser 140.

Befindet sich das auf diese Weise serverseitig erstellte Programm dann auf dem Client 130, so kann es dort unmittelbar zur Steuerung eines oder mehrerer Hydraulikgeräte 190 eingesetzt werden. Hierfür stehen in einer Ausgestaltung der Erfindung mehrere Möglichkeiten zur Verfügung, die einzeln oder auch kombiniert zur Anwendung kommen können. Diese Möglichkeiten sind in Fig. 1 gesammelt dargestellt und verwenden alle oder einen Teil der Einheiten 150, 160, 170 und 180.

Ist beispielsweise ein Hydraulikgerät 190 mit einem Prozessor ausgestattet, der die direkte Ausführung des vom Server 100 erzeugten Programms gestattet, so kann in einer Ausgestaltung der Erfindung eine Datenübertragungseinrichtung 150 zum Einsatz kommen, die das Programm direkt auf dem Hydraulikgerät 190 speichert. Sind der Server 100 und damit auch die Programmerzeugungseinrichtung 120 in dem Hydraulikgerät 190 integriert, so kann dieser Schritt entfallen oder lediglich aus einem Umspeichern innerhalb des Gerätes selbst bestehen.

In einer anderen Ausgestaltung ist zumindest eines der Hydraulikgeräte 190 nicht zur selbständigen Ausführung des Programms fähig, sondern arbeitet beispielsweise im bereits erwähnten Slave-Betrieb. In diesem Fall wird das erzeugte Programm in einer Programmausführungseinrichtung 160, 170 ausgeführt, die entweder Teil des Client-Computers 130 oder ein separater eigenständiger Computer ist. Die von dem in der Programmausführungseinrichtung 160, 170 laufenden Programm erzeugten Steuerbefehle werden dann, vorzugsweise über eine Geräteschnittstelle 180, an das Hydraulikgerät 190 gegeben.

In einer Ausgestaltung der Erfindung sind wenigstens ein Teil der Hydraulikgeräte 190 über einen CAN-Bus vernetzt. Empfängt ein solches Hydraulikgerät 190 Steuerbefehle von einer Programmausführungseinrichtung 160, 170 und verfügt diese Programmausführungseinrichtung 160, 170 nicht selbst über die Möglichkeit, Daten auf einen CAN-Bus zu schicken, so kann eine Geräteschnittstelle 180 eingesetzt werden, die beispielsweise ein USB-CAN-Bus-Adapter der Firma Peak sein kann.

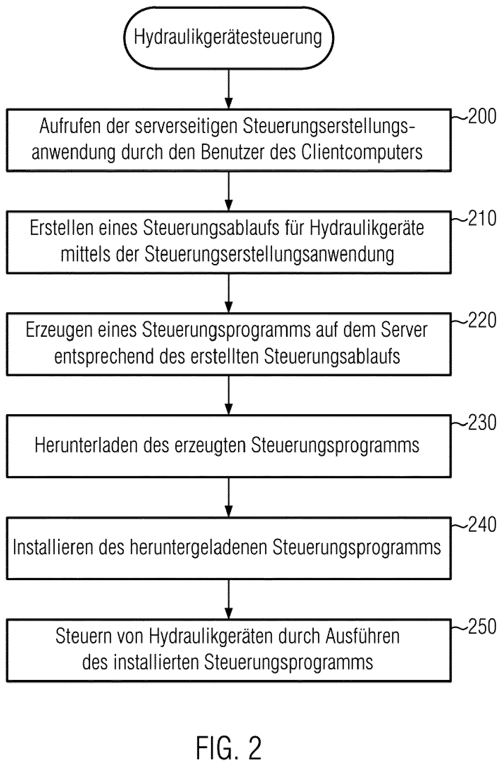

Fig. 2 zeigt einen exemplarischen Ablauf in einer Ausgestaltung der Erfindung, die im Zusammenhang mit der Systemanordnung von Fig. 1 zur Anwendung kommen kann.

In einem Schritt 200 ruft der Benutzer des Client-Computers 130 über den Web-Browser 140 eine Steuerungserstellungsanwendung auf dem Anwendungsserver 110 des Servers 100 auf. Diese Anwendung erzeugt Bildschirmausgaben im Fenster des Web-Browsers 140.

In Schritt 210 erstellt der Benutzer des Client-Computers 130 mittels der serverseitig bereitgestellten Anwendung einen Steuerungsablauf für ein oder mehrere der Hydraulikgeräte 190.

Auf die Eingabe eines entsprechenden Befehls durch den Benutzer des Client-Computers 130 hin erzeugt dann die Programmerzeugungseinrichtung 120 des Servers 100 ein Steuerungsprogramm in Schritt 220 entsprechend dem erstellten Steuerungsablauf.

Dieses erzeugte Steuerungsprogramm kann anschließend in Schritt 230 über den Anwendungsserver 110 des Servers 100 an den auf dem Client-Computer 130 betriebenen Web-Browser 140 heruntergeladen werden. In einer Ausgestaltung, in der der Server 100 in einem Hydraulikgerät oder einer Steuerung für Hydraulikgeräte integriert ist, kann der Schritt 230 des Herunterladens entfallen.

Schließlich wird in Schritt 240 das Steuerungsprogramm auf einem oder mehreren der beschriebenen Wege installiert. Beispielsweise kann es mittels der Datenübertragungseinrichtung 150 direkt auf einem Hydraulikgerät 190 gespeichert werden. Alternativ wird es auf einer im Client 130 integrierten Programmausführungseinrichtung 160 und/oder auf einem als Programmausführungseinrichtung 170 betriebenen separaten Computer gespeichert. In einer Ausgestaltung, in der der Server 100 in einem Hydraulikgerät oder einer Steuerung für Hydraulikgeräte integriert ist, kann der Schritt 240 des Herunterladens entfallen oder lediglich aus einem Umspeichern innerhalb des Geräts bestehen.

Zur Steuerung der entsprechenden Hydraulikgeräte 190 muss das installierte Steuerungsprogramm im Schritt 250 nun nur noch zur Ausführung gelangen. Wie bereits beschrieben, erfolgt diese Ausführung entweder direkt auf dem Hydraulikgerät 190 oder auf einem der Programmausführungseinrichtungen 160, 170.

Wie bereits erwähnt, erfolgt die browserbasierte Programmierung in einer besonders bevorzugten Ausgestaltung mittels grafischer Programmierung. Dies wird in Fig. 3 veranschaulicht.

Fig. 3 zeigt den Inhalt eines Fensters 300 des Web-Browsers 140. Eine (hier beispielhaft horizontal dargestellte) Menüzeile 305 ermöglicht es dem Benutzer des Client-Computers 130, Steuerungsabläufe zu definieren. Ein aktuell in Bearbeitung befindlicher Steuerungsablauf wird dann in der Bildschirmfläche 310 grafisch dargestellt.

Wie der Menüzeile 305 zu entnehmen ist, verfügt die vom Anwendungsserver 110 bereitgestellte Anwendung über eine Projektverwaltung, die vorzugsweise benutzerspezifisch ist. Es ist hierdurch möglich, benutzerabhängige Projekte mehrerer Benutzer getrennt voneinander zu erstellen, zu öffnen, zu speichern und zu löschen.

In einem weiteren Menüpunkt wird dem Benutzer die Möglichkeit gegeben, Funktionsblöcke, wie z. B. Eingänge, Ausgänge, Logikblöcke und vordefinierte Funktionen, aus einer vorhandenen Liste auszuwählen. Die ausgewählten Funktionsblöcke werden dann im Oberflächenbereich 310 dargestellt.

Schließlich verfügt die Menüzeile 305 über die Möglichkeit, die Programmerstellung mittels der Programmerzeugungseinrichtung 120 sowie den Download des erzeugten Programms zu veranlassen.

Wie in dem exemplarisch dargestellten Steuerungsablauf der Fig. 3 zu ersehen ist, werden verschiedene Funktionsblöcke 315-355 sowie zugehörige Verbindungen 360-390 dargestellt. Dabei können die Funktionsblöcke Signaleingänge und -ausgänge repräsentieren, mathematischen oder logischen Operationen entsprechen, Signalwandler symbolisieren oder auch komplexere vordefinierte Funktionen angeben.

Gemäß einer Ausgestaltung der Erfindung umfassen die Funktionsblöcke auch wenigstens einen Funktionsblock, der das Antwortverhalten eines Hydraulikgeräts oder einer Steuerung für ein Hydraulikgerät simuliert. Sollen Hydraulikgeräte oder ihre Steuerungen beispielsweise über einen CAN-Bus verbunden werden und kommt eine Simulationssoftware zur Anwendung, beispielsweise eine Software der Firma Peak, so ist es vorteilhaft, einen CAN-Bus-Funktionsblock vorzusehen, der das Antwortverhalten eines realen Hydraulikgerätes oder einer realen Steuerung simuliert.

In einer bevorzugten Ausgestaltung der Erfindung sind die im Menü 305 zur Verfügung gestellten Funktionsblöcke bereits auf das jeweils betroffene Hydraulikgerät 190 abgestimmt. Beispielsweise werden Funktionsblöcke, die zu dem entsprechenden Hydraulikgerät 190 nicht kompatibel sind, im Menü 305 nicht gezeigt oder sind dort nicht auswählbar. In einer anderen Ausgestaltung sind Funktionsblöcke, die prinzipiell zu Hydraulikgeräten 190 verschiedener Typen passen würden, auf ein aktuell zu steuerndes Hydraulikgerät 190 speziell vorkonfiguriert.

Funktionsblöcke können in einer Ausgestaltung durch spezielle Farb- oder Formgebung als von gleichem oder ähnlichem Typ gekennzeichnet sein. Beispielsweise werden in einer solchen Ausführung Funktionsblöcke durch entsprechende Farbgebung in logische Gruppen eingeteilt, d. h. alle Funktionsblöcke eines gleichen Typs besitzen eine ähnliche Farbe. Beispielsweise könnten in Fig. 3 die Blöcke 315 und 325 durch dieselbe Farbe als Blöcke gleichen Typs gekennzeichnet sein. Die Blöcke 330 und 335 könnten ebenfalls eine gemeinsame Farbe aufweisen, die aber von der Farbe der Blöcke 315, 325 verschieden ist.

Die in der Fläche 310 vorzugsweise rasterförmig angeordneten Funktionsblöcke 315-355 sind durch Signalverbindungen 360-390 miteinander verknüpft, die ebenfalls je nach unterschiedlichen Signaltypen farblich voneinander unterscheidbar gekennzeichnet sein können. Beispielsweise könnten die Verbindungen 360 und 370 dieselbe Farbe aufweisen, während die Verbindungen 365, 375, 380, 385 und 390 eine andere gemeinsame Farbe aufweisen. In einer Ausführungsform können auf diese Weise analoge von digitalen Signalen unterschieden werden.

Vorzugsweise ist die vom Anwendungsserver 110 bereitgestellte Anwendung imstande, Verbindungen mit einem falschen Signaltyp zu verhindern. Allgemein ist die Anwendung vorzugsweise eingerichtet, solche Verknüpfungen zu verhindern, die entweder bei der Programmerstellung in der Programmerzeugungseinrichtung 120 oder bei der Ausführung des erstellten Programms zu Fehlern führen würden.

Die Erfindung gemäß den beschriebenen Ausführungsbeispielen gestattet daher dem ein Hydraulikgerät einsetzenden Techniker oder Ingenieur eine vollumfängliche und komfortable Programmierung von Hydraulikgerätesteuerungen, ohne selbst Programmierwerkzeuge besitzen und warten zu müssen. Die Erfindung stellt somit eine signifikante Verbesserung gegenüber dem Stand der Technik dar.

## Patentansprüche

1. Verfahren zum Steuern eines oder mehrerer Hydraulikgeräte, umfassend:
Erstellen (210) eines Steuerungsablaufs für das eine oder die mehreren Hydraulikgeräte (190) in einer von einem Server (100) bereitgestellten browserbasierten Anwendung;
Veranlassen (220) der serverseitigen Erzeugung eines den erstellten Steuerungsablauf realisierenden Programmes; und
Ausführen (250) des erzeugten Programms zur Durchführung des Steuerungsablaufs für das eine oder die mehreren Hydraulikgeräte (190),
wobei die von dem Server bereitgestellte browserbasierte Anwendung eine grafische Programmierung des Steuerungsablaufs gestattet, indem verschiedene Funktionselemente (315-390) auswählbar und miteinander verbindbar sind,
**dadurch gekennzeichnet, dass**
die von dem Server bereitgestellte browserbasierte Anwendung nur solche Funktionselemente auswählbar zur Verfügung stellt, die in Steuerungsabläufen für das eine oder die mehreren Hydraulikgeräte verwendbar sind und im Hinblick auf das eine oder die mehreren Hydraulikgeräte vorkonfiguriert sind.

2. Verfahren nach Anspruch 1, wobei das eine oder die mehreren Hydraulikgeräte einen Prozessor zur Ausführung des erzeugten Programms umfassen, wobei das den erstellten Steuerungsablauf realisierende Programm ausführbaren Programmcode enthält, der auf dem Prozessor ausführbar ist, und wobei das Verfahren ferner umfasst: Herunterladen (230) und Speichern (240) des erzeugten Programms auf dem einen oder den mehreren Hydraulikgeräten vor dessen Ausführung.

3. Verfahren nach Anspruch 1 oder 2, wobei das eine oder die mehreren Hydraulikgeräte zur Durchführung des Steuerungsablaufs mit einem Computer (160, 170) verbindbar sind, wobei das den erstellten Steuerungsablauf realisierende Programm ausführbaren Programmcode enthält, der auf dem Computer ausführbar ist, und wobei das Verfahren ferner umfasst:
Herunterladen (230) und Speichern (240) des erzeugten Programms auf dem Computer; und
Aufbauen einer Datenverbindung von dem Computer zu dem einen oder den mehreren Hydraulikgeräten, wobei der Schritt des Ausführens umfasst: Senden von Steuerbefehlen von dem Computer über die Datenverbindung an das eine oder die mehreren Hydraulikgeräte zur Durchführung des Steuerungsablaufs.

4. Verfahren nach einem der Ansprüche 1 bis 3, wobei das eine oder die mehreren Hydraulikgeräte den Server (100) umfassen.

5. Verfahren nach einem der Ansprüche 1 bis 4, wobei das den erstellten Steuerungsablauf realisierende Programm durch Compilierung auf dem Server erzeugt wird.

6. Verfahren nach einem der vorherigen Ansprüche, wobei die von dem Server bereitgestellte browserbasierte Anwendung eingerichtet ist, Verbindungen von Funktionselementen automatisch zu unterbinden, die die Erzeugung oder Ausführung des Programmes verhindern oder dabei zu Fehlern führen würden.

7. Verfahren nach einem der vorherigen Ansprüche, wobei die von dem Server bereitgestellte browserbasierte Anwendung verschiedene Signaltypen oder Funktionselemente farblich unterschiedlich grafisch darstellt.

8. Verfahren nach einem der vorherigen Ansprüche, wobei die von dem Server bereitgestellte browserbasierte Anwendung die ausgewählten Funktionselemente an einem Raster ausgerichtet grafisch darstellt.

9. Verfahren nach einem der vorherigen Ansprüche, wobei die vom Server bereitgestellte browserbasierte Anwendung mehrbenutzerfähig ist und eine benutzerspezifische Projektverwaltung umfasst.

10. Vorrichtung (100) zum Durchführen eines Verfahrens gemäß einem der Patentansprüche 1 bis 9 und zum Erzeugen eines Programms zur Durchführung eines Steuerungsablaufs für ein oder mehrere Hydraulikgeräte (190), umfassend:
einen Anwendungsserver (110) zum Bereitstellen einer Anwendung für einen mit der Vorrichtung verbundenen Clientcomputer (130) zum Erstellen des Steuerungsablaufs für das eine oder die mehreren Hydraulikgeräte durch Bedienung der Anwendung mittels eines Browsers des Clientcomputers; und
eine Programmerzeugungseinrichtung (120) zum Erzeugen eines den erstellten Steuerungsablauf realisierenden Programmes.

## Claims

1. Method of controlling one or more hydraulic devices, comprising:
creating (210) a control sequence for the one or more hydraulic devices (190) in a browser-based application provided by a server (100);
initiating (220) the server-side generation of a program implementing the created control sequence;and
execution (250) of the generated program to execute the control sequence for the one or more hydraulic devices (190),
wherein the browser-based application provided by the server allows a graphical programming of the control sequence by selecting and interconnecting different functional elements (315-390),
**characterised in that**
the browser-based application provided by the server makes available selectable only those functional elements which can be used in control sequences for the one or more hydraulic devices and which are preconfigured with regard to the one or more hydraulic devices.

2. Method according to claim 1, wherein the one or more hydraulic devices comprise a processor for executing the generated program, wherein the program implementing the generated control sequence contains an executable program code which is executable on the processor, and wherein the method further comprises: downloading (230) and storing (240) the generated program on the one or more hydraulic devices prior to execution thereof.

3. Method of claim 1 or 2, wherein the one or more hydraulic devices are connectable to a computer (160, 170) for performing the control sequence, wherein the program implementing the generated control sequence includes the executable program code executable on the computer, and wherein the method further comprises: downloading (230) and storing (240) the generated program on the computer; and establishing a data link from the computer to the one or more hydraulic devices, wherein the step of executing comprises: sending control commands from the computer via the data link to the one or more hydraulic devices to perform the control sequence.

4. Method according to any one of claims 1 to 3, wherein the one or more hydraulic devices comprise the server (100).

5. Method according to one of claims 1 to 4, wherein the program realizing the created control sequence is generated by compilation on the server.

6. Method according to one of the previous claims, wherein the browser-based application provided by the server is arranged to automatically block connections of functional elements which would prevent the generation or execution of the program or would lead to errors in the process.

7. Method according to one of the previous claims, wherein the browser-based application provided by the server is arranged to display different signal types or functional elements in different colours.

8. Method according to one of the previous claims, whereby the browser-based application provided by the server graphically displays the selected functional elements aligned with a grid.

9. Method according to one of the previous claims, wherein the browser-based application provided by the server is multi-user capable and comprises a user-specific project management.

10. Apparatus (100) for performing a method according to any one of claims 1 to 9 and for generating a program for performing a control sequence for one or more hydraulic devices (190), comprising:
an application server (110) for providing an application to a client computer (130) connected to the apparatus for creating the control sequence for the one or more hydraulic devices by operating the application using a browser of the client computer; and
a program generation device (120) for generating a program which implements the created control sequence.

## Revendications

1. Procédé de commande d'un ou plusieurs dispositifs hydrauliques, comprenant :
créer (210) une procédure de commande pour lesdits un ou plusieurs dispositifs hydrauliques (190) dans une application sur la base d'un navigateur web qui est rendue disponible par un serveur (100) ;
ordonner (220) la production, au niveau du serveur, d'un programme effectuant la procédure de commande que l'on vient de créer ; et
exécuter (250) le programme produit pour effectuer la procédure de commande pour lesdits un ou plusieurs dispositifs hydrauliques (190) ;
ladite application sur la base d'un navigateur web qui est rendue disponible par un serveur permet une programmation graphique de la procédure de commande en permettant de sélectionner et de combiner divers éléments fonctionnels (315-390),
**caractérisé en ce que**
ladite application sur la base d'un navigateur web qui est rendue disponible par un serveur est destinée à ne rendre disponible que les éléments fonctionnels qui sont apte à être employés pour lesdits un ou plusieurs dispositifs hydrauliques et qui sont préconfigurés relatif auxdits un ou plusieurs dispositifs hydrauliques.

2. Procédé selon la revendication 1, dans lequel lesdits un ou plusieurs dispositifs hydrauliques comprennent un processeur destiné à exécuter le programme produit, ledit programme effectuant la procédure de commande crée contenant un code de programme exécutable qui peut être exécuté sur le processeur, et ledit procédé comprenant en outre : télécharger (230) et stocker (240) le programme produit sur lesdits un ou plusieurs dispositifs hydrauliques préalable à son exécution.

3. Procédé selon la revendication 1 ou 2, dans lequel, pour l'exécution de la procédure de commande, lesdits un ou plusieurs dispositifs hydrauliques peuvent être connectés à un ordinateur (160, 170), ledit programme effectuant la procédure de commande crée contenant un code de programme exécutable qui peut être exécuté sur le processeur, et ledit procédé comprenant en outre : télécharger (230) et stocker (240) le programme produit sur ledit ordinateur ; et établir une connexion de transmission de données depuis l'ordinateur auxdits un ou plusieurs dispositifs hydrauliques, l'étape d'exécution comprenant : transmettre, par voie de ladite connexion de transmission de données, des commandes depuis l'ordinateur auxdits un ou plusieurs dispositifs hydrauliques pour exécuter la procédure de commande.

4. Procédé selon l'une quelconque des revendications 1 à 3, dans lequel lesdits un ou plusieurs dispositifs hydrauliques comprennent le serveur (100).

5. Procédé selon l'une quelconque des revendications 1 à 4, dans lequel ladite programme effectuant la procédure de commande crée est produit par compilation au niveau du serveur.

6. Procédé selon l'une quelconque des revendications précédentes, dans lequel ladite application sur la base d'un navigateur web qui est rendue disponible par un serveur est adaptée pour prévenir automatiquement des combinaisons d'éléments fonctionnels par lesquels la production ou l'exécution du programme serait empêchée ou des erreurs seraient provoquées.

7. Procédé selon l'une quelconque des revendications précédentes, dans lequel ladite application sur la base d'un navigateur web qui est rendue disponible par un serveur effectue une visualisation graphique de divers types de signal et éléments fonctionnels par des couleurs différentes.

8. Procédé selon l'une quelconque des revendications précédentes, dans lequel ladite application sur la base d'un navigateur web qui est rendue disponible par un serveur effectue une visualisation graphique des éléments fonctionnels sélectionnés
en les orientant sur une trame.

9. Procédé selon l'une quelconque des revendications précédentes, dans lequel ladite application sur la base d'un navigateur web qui est rendue disponible par un serveur est une application multi-utilisateur et comporte une administration de projet personnalisée.

10. Dispositif (100) pour la mise en oeuvre d'un procédé selon l'une quelconque des revendications 1 à 9 et pour la production d'un programme effectuant une procédure de commande pour un ou plusieurs dispositifs hydrauliques (190), comprenant :
un serveur d'applications (110) pour rendre disponible une application pour un ordinateur client (130) connecté audit dispositif afin qu'il soit possible de créer une procédure de commande pour lesdits un ou plusieurs dispositifs hydrauliques en manipulant ladite application moyennant un navigateur web dudit ordinateur client ; et
des moyens (120) de production de programme pour produire un programme effectuant la procédure de commande crée.
